# EUROPEAN PATENT APPLICATION

(11) **EP 4 607 845 A1**
(43) Date of publication of application: **27.08.2025**
(21) Application number: 23896028.0
(22) Date of filing: 30.06.2023
(51) Int. Cl.: H04L 9/14, H04L 9/18

(54) **SECURE TRANSMISSION METHOD AND APPARATUS FOR VIDEO STREAM**

(30) Priority: 29.11.2022 CN 202211505231; 01.03.2023 CN 202310231885
(71) Applicant: Huawei Technologies Co., Ltd., Shenzhen, Guangdong 518129 (CN)
(72) Inventor: LUO, Huamin, Shenzhen, Guangdong 518129 (CN)
(74) Representative: Epping - Hermann - Fischer
(86) International application number: PCT/CN2023/105348
(87) International publication number: WO 2024/113865

(57) **Abstract**

This application provides a secure transmission method for a video stream and an apparatus. The secure transmission method for a video stream in this application includes: An IPC encrypts a to-be-transmitted video stream based on a pre-obtained first stream key to obtain an encrypted video stream. The IPC encrypts the first stream key based on a pre-obtained first wrapping key to obtain a first encrypted stream key. The IPC sends a data stream to a cloud platform, where the data stream includes the encrypted video stream and the first encrypted stream key. The cloud platform stores the data stream. User equipment receives the to-be-processed data stream sent by the cloud platform, where the to-be-processed data stream includes the encrypted video stream and the first encrypted stream key. The user equipment decrypts the first encrypted stream key based on a pre-obtained first wrapping key to obtain the first stream key. The user equipment decrypts the encrypted video stream based on the first stream key to obtain a to-be-played video stream. In this application, leakage of user privacy data and a stream key can be avoided.

## Description

This application claims priorities to Chinese Patent Application No. 202211505231.9, filed with the China National Intellectual Property Administration on November 29, 2022 and entitled "SECURE TRANSMISSION METHOD FOR VIDEO STREAM AND APPARATUS", and to Chinese Patent Application No. 202310231885.5, filed with the China National Intellectual Property Administration on March 1, 2023, and entitled "SECURE TRANSMISSION METHOD FOR VIDEO STREAM AND APPARATUS", both of which are incorporated herein by reference in their entireties.

### TECHNICAL FIELD

This application relates to an Internet Protocol camera (IP Camera, IPC) technology, and in particular, to a secure transmission method for a video stream and an apparatus.

### BACKGROUND

With large-scale application of IPCs (digital video devices that integrate functions of video servers and cameras) in the monitoring field, IPC-based internet of video things gradually becomes an important part of internet of things. Main features of the internet of video things include access of a large quantity of IPC terminals, large data traffic, a plurality of layers of networks, possibly across a plurality of cloud platforms, and the like. Therefore, how to ensure security of a video stream (including user privacy data) collected by the IPC during transmission, storage, and use on the entire network becomes a key technology to be resolved urgently.

### SUMMARY

This application provides a secure transmission method for a video stream and an apparatus, to avoid leakage of user privacy data and a stream key.

According to a first aspect, this application provides a secure transmission method for a video stream, including: An IPC encrypts a to-be-transmitted video stream based on a pre-obtained first stream key to obtain an encrypted video stream. The IPC encrypts the first stream key based on a pre-obtained first wrapping key to obtain a first encrypted stream key. The IPC sends a data stream to a cloud platform, where the data stream includes the encrypted video stream and the first encrypted stream key. The cloud platform stores the data stream. User equipment receives the to-be-processed data stream sent by the cloud platform, where the to-be-processed data stream includes the encrypted video stream and the first encrypted stream key. The user equipment decrypts the first encrypted stream key based on a pre-obtained first wrapping key to obtain the first stream key. The user equipment decrypts the encrypted video stream based on the first stream key to obtain a to-be-played video stream.

In an embodiment of this application, the encrypted video stream and the encrypted stream key are transmitted between the IPC and the cloud platform, and between the cloud platform and the user equipment. The video stream (including user privacy data) can be encrypted and transmitted, to avoid leakage of the user privacy data. In addition, the stream key can be encrypted and transmitted, to avoid leakage of the stream key.

The first stream key is used to encrypt the video stream. In this embodiment of this application, the first stream key may be generated based on a binding procedure between the user equipment and the IPC. The foregoing binding procedure is described in the following embodiment.

The IPC captures a monitoring video in a field of view and performs video encoding on the video to obtain the video stream. To avoid leakage of the user privacy data, the IPC may first encrypt the to-be-transmitted video stream, then transmit the encrypted video stream to the cloud platform for storage, and transmit the encrypted video stream to the user equipment for decryption and playing.

Optionally, the IPC may encrypt the to-be-transmitted video stream based on the first stream key by using an algorithm such as advanced encryption standard (Advanced Encryption Standard, AES), treble data encryption standard (Treble Data Encryption Standard, TDES), or SM4.

The first wrapping key is used to encrypt the first stream key. In this embodiment of this application, the first wrapping key may be generated based on the binding procedure between the user equipment and the IPC.

To avoid leakage of the stream key, the IPC may first encrypt the first stream key, then transmit the first encrypted stream key to the cloud platform for storage, and transmit the first encrypted stream key to the user equipment, which is decrypted and then used for decrypting the encrypted video stream.

Optionally, the IPC may encrypt the first stream key based on the first wrapping key by using a symmetric encryption algorithm. The symmetric encryption algorithm may include the AES, the TDES, the SM4, and the like.

As a video stream storage platform, the cloud platform may locally store a plurality of encrypted video streams from a plurality of IPCs. When the user equipment requests a video, the cloud platform sends a corresponding encrypted video stream to the user equipment. Therefore, the IPC may send the data stream to the cloud platform, where the data stream includes the encrypted video stream obtained through encryption in step 701. In addition, in order to help the user equipment decrypt the encrypted video stream, the data stream further includes the first encrypted stream key obtained through encryption in step 702.

A user may use a video application (application, APP) on the user equipment to select a video that the user wants to play, and then the video APP may request the corresponding video from the cloud platform in response to the user's selection. After receiving a request message of the video APP, the cloud platform may select a corresponding encrypted video stream from the plurality of locally stored encrypted video streams, and then send the encrypted video stream to the user equipment. The to-be-processed data stream received by the user equipment may be one or more of a plurality of data streams stored on the cloud platform. That is, in addition to the encrypted video stream corresponding to the requested video, the to-be-processed data stream further includes an encrypted stream key (the first encrypted stream key) of the encrypted video stream.

The first wrapping key is used to decrypt the first encrypted stream key. In this embodiment of this application, the first wrapping key may be generated based on the binding procedure between the user equipment and the IPC.

The to-be-processed data stream received by the user equipment includes the first encrypted stream key for decryption. Therefore, after obtaining the first wrapping key, the user equipment may decrypt the first encrypted stream key based on the first wrapping key by using a symmetric decryption algorithm. The symmetric decryption algorithm may be a decryption algorithm corresponding to the symmetric encryption algorithm in step 702.

The first stream key is used to decrypt the encrypted video stream. In this embodiment of this application, the first stream key may be generated based on the binding procedure between the user equipment and the IPC.

The to-be-processed data stream received by the user equipment further includes the encrypted video stream. Therefore, after obtaining the first stream key, the user equipment may decrypt the encrypted video stream based on the first stream key, and a used algorithm may be a decryption algorithm corresponding to an algorithm in step 701.

Then, the user equipment may perform video decompression on the to-be-played video stream obtained through decryption, to obtain a reconstructed video, and play the reconstructed video.

In a possible implementation, the IPC generates a device public key and a device private key. The IPC sends a device identity and the device public key to the cloud platform. The cloud platform signs the device identity and the device public key based on a platform private key to generate a device certificate. The cloud platform sends the device certificate to the IPC. The IPC verifies the device certificate based on a pre-built-in platform public key. The IPC stores the device certificate when the verification succeeds.

The device identity (identity, ID) is written into IPC firmware by a vendor of the IPC at delivery. During initial configuration, the IPC may register with the cloud platform. The device public key and the device private key are generated first, and may be generated by using a standard key generation algorithm.

The IPC sends the device ID and the generated device public key to the cloud platform.

The cloud platform signs the device public key and the device ID based on the platform private key to generate the device certificate, and registers the IPC.

The platform private key and the platform public key are pre-generated by the cloud platform. When the IPC is at delivery, the vendor writes the platform public key of the cloud platform into the IPC. In this way, the IPC may verify the received device certificate based on the built-in platform public key.

Based on the foregoing IPC registration process, the IPC has the device certificate signed by the cloud platform, and the cloud platform also obtains information (including the device ID and the device public key of the IPC) about the IPC, to manage and maintain the IPC and video data of the IPC.

Optionally, the user equipment may also register with the cloud platform with reference to steps in a process 800. A difference lies in that the user equipment may generate a user public key and a user private key based on a user ID, and send the user identity and the user public key to the cloud platform, and the cloud platform signs the user ID and the user public key based on the platform private key to generate a user certificate.

In a possible implementation, the user equipment sends the pre-obtained user certificate to the IPC. The IPC verifies the user certificate based on the pre-built-in platform public key. The IPC generates a first random number when the verification succeeds. The IPC sends the first random number to the user equipment. The user equipment generates the first wrapping key based on the first random number. The user equipment encrypts the first random number based on the first wrapping key to obtain a first encrypted random number. The user equipment sends the first encrypted random number to the IPC. The IPC generates the first wrapping key based on the first random number. The IPC decrypts the first encrypted random number based on the first wrapping key to obtain a second random number. The IPC generates the first stream key when the second random number is the same as the first random number.

The user equipment may obtain the user certificate in the foregoing method. When initiating a binding request for the IPC, the user equipment may send the user certificate to the IPC.

As described above, the user certificate and the device certificate are both obtained by the cloud platform through signing based on the platform private key, and therefore may both be verified by using the platform public key.

The user equipment may first obtain a shared key shared with the IPC, and then obtain the first wrapping key based on the first random number and the shared key by using a key derivation function (Key Derivation Function, KDF). The KDF may be, for example, a password-based key derivation function 2 (Password-Based Key Derivation Function 2, PBKDF2), and may use the shared key as a password (Password) and use the first random number as a salt, to obtain the first wrapping key by using a hash (Hash) operation. Alternatively, the KDF may be, for example, a hash-based message authentication code (Hash-based Message Authentication Code, HMAC)-based KDF (HMAC-based KDF, HKDF), and may use the shared key as an HMAC key and use the first random number as an input, to obtain the first wrapping key by using an HMAC operation.

In a possible implementation, the user equipment may receive the device certificate sent by the IPC, obtain the device public key of the IPC based on the device certificate, and obtain the shared key based on the device public key and the pre-obtained user private key by using a key exchange algorithm (Diffie Hellman Key Agreement, DHKA). An asymmetric algorithm used by the DHKA may be, for example, an RSA encryption algorithm (RSA algorithm), or ECC or SM2.

In this way, the first wrapping key is associated with the user ID, and the user equipment may also master the key.

For a method for generating the first wrapping key by the IPC, refer to step 905. Details are not described herein again. Based on the foregoing binding process, the IPC and the user equipment both have the first wrapping key, and the IPC generates the first stream key for the user equipment, so that a subsequent video stream transmission process can be performed.

In a possible implementation, the user equipment sends a key update request to the IPC. The IPC generates a third random number and a second stream key in response to the key update request. The IPC generates a second wrapping key based on the third random number. The IPC encrypts the second stream key based on the second wrapping key to obtain a second encrypted stream key. The IPC sends the third random number and the second encrypted stream key to the user equipment. The user equipment generates the second wrapping key based on the third random number. The user equipment decrypts the second encrypted stream key based on the second wrapping key to obtain the second stream key.

When a network address of the user equipment changes, or the user equipment establishes a new binding relationship with the IPC, or in another case requiring a key update, the user equipment may send the key update request to the IPC to initiate a key update process.

For a method for generating the second wrapping key by the IPC, refer to step 905. Details are not described herein again.

For a method for generating the second wrapping key by the user equipment, refer to step 905. Details are not described herein again.

Based on the foregoing key update process, the IPC and the user equipment both have the updated second stream key, so that a subsequent video stream transmission process can be performed.

According to a second aspect, this application provides a user apparatus, including: a receiving module, configured to receive a to-be-processed data stream sent by a cloud platform, where the to-be-processed data stream includes an encrypted video stream and a first encrypted stream key; a key module, configured to decrypt the first encrypted stream key based on a pre-obtained first wrapping key to obtain a first stream key; and a decryption module, configured to decrypt the encrypted video stream based on the first stream key to obtain a to-be-played video stream.

In a possible implementation, a sending module is further included. The sending module is configured to send a pre-obtained user certificate to an Internet Protocol camera IPC. The receiving module is further configured to receive a first random number sent by the IPC, where the first random number is generated after the IPC successfully verifies the user certificate. The key module is further configured to generate the first wrapping key based on the first random number.

In a possible implementation, the key module is specifically configured to generate a shared key shared with the IPC, and obtain the first wrapping key based on the first random number and the shared key by using a key derivation function.

In a possible implementation, the receiving module is further configured to receive a device certificate sent by the IPC. The key module is specifically configured to obtain a device public key of the IPC based on the device certificate, and obtain the shared key based on the device public key and a pre-obtained user private key by using a key exchange algorithm.

In a possible implementation, the key module is further configured to encrypt the first random number based on the first wrapping key to obtain a first encrypted random number. The sending module is further configured to send the first encrypted random number to the IPC.

In a possible implementation, the sending module is further included. The sending module is further configured to send a key update request to the IPC. The receiving module is further configured to receive a second random number and a second encrypted stream key that are sent by the IPC, where the second random number and the second encrypted stream key are generated by the IPC in response to the key update request. The key module is further configured to generate a second wrapping key based on the second random number, and decrypt the second encrypted stream key based on the second wrapping key to obtain a second stream key.

According to a third aspect, this application provides a monitoring apparatus, including: an encryption module, configured to encrypt a to-be-transmitted video stream based on a pre-obtained first stream key to obtain an encrypted video stream; a key module, configured to encrypt the first stream key based on a pre-obtained first wrapping key to obtain a first encrypted stream key; and a sending module, configured to send a data stream to a cloud platform, where the data stream includes the encrypted video stream and the first encrypted stream key.

In a possible implementation, a receiving module is further included. The receiving module is configured to receive a user certificate sent by user equipment. The key module is further configured to verify the user certificate based on a pre-built-in platform public key, generate a first random number when the verification succeeds, and generate the first wrapping key based on the first random number.

In a possible implementation, the sending module is further configured to send the first random number to the user equipment. The receiving module is further configured to receive a first encrypted random number sent by the user equipment, where the first encrypted random number is obtained by the user equipment by encrypting the first random number. The key module is further configured to decrypt the first encrypted random number based on the first wrapping key to obtain a second random number, and generate the first stream key when the second random number is the same as the first random number.

In a possible implementation, the key module is specifically configured to obtain a shared key shared with the user equipment, and obtain the first wrapping key based on the first random number and the shared key by using a key derivation function.

In a possible implementation, the key module is specifically configured to receive a user certificate sent by the user equipment, obtain a user public key of the user equipment based on the user certificate, and obtain the shared key based on the user public key and a pre-obtained device private key by using a key exchange algorithm.

In a possible implementation, the key module is further configured to generate a device public key and the device private key. The sending module is further configured to send a device identity and the device public key to the cloud platform. The receiving module is further configured to receive a device certificate sent by the cloud platform, where the device certificate is generated by the cloud platform by signing the device identity and the device public key based on a platform private key. The key module is further configured to verify the device certificate based on a pre-built-in platform public key, and store the device certificate when the verification succeeds.

In a possible implementation, the receiving module is further included. The receiving module is further configured to receive a key update request sent by the user equipment. The key module is further configured to generate a third random number and a second stream key in response to the key update request, generate a second wrapping key based on the third random number, and encrypt the second stream key based on the second wrapping key to obtain a second encrypted stream key. The sending module is further configured to send the third random number and the second encrypted stream key to the user equipment.

According to a fourth aspect, this application provides user equipment, including: one or more processors; and a memory, configured to store one or more programs. When the one or more programs are executed by the one or more processors, the one or more processors are enabled to implement the method according to any implementation of the first aspect.

According to a fifth aspect, this application provides a monitoring device, including: one or more processors; one or more cameras, configured to capture a monitoring video; and a memory, configured to store one or more programs. When the one or more programs are executed by the one or more processors, the one or more processors are enabled to implement the method according to any implementation of the second aspect.

According to a sixth aspect, this application provides a computer-readable storage medium, including a computer program. When the computer program is executed on a computer, the computer is enabled to perform the method according to any implementation of the first aspect and the second aspect.

According to a seventh aspect, this application provides a computer program product. The computer program product includes computer program code. When the computer program code is run on a computer, the computer is enabled to perform the method according to any implementation of the first aspect and the second aspect.

### BRIEF DESCRIPTION OF DRAWINGS

FIG. 1 is a diagram of a structure of internet of video things;
FIG. 2 is a diagram of a privacy protection solution of existing internet of video things;
FIG. 3 is a diagram of an application scenario according to an embodiment of this application;
FIG. 4 is a diagram of a structure of user equipment 400;
FIG. 5 is a diagram of a structure of a cloud platform 500;
FIG. 6 is a diagram of a structure of an IPC 600;
FIG. 7 is a flowchart of a process 700 of a secure transmission method for a video stream according to an embodiment of this application;
FIG. 8 is a flowchart of a process 800 of a secure transmission method for a video stream according to an embodiment of this application;
FIG. 9 is a flowchart of a process 900 of a secure transmission method for a video stream according to an embodiment of this application;
FIG. 10 is a flowchart of a process 1000 of a secure transmission method for a video stream according to an embodiment of this application;
FIG. 11 is a diagram of a secure transmission method for a video stream according to an embodiment of this application;
FIG. 12 is a diagram of a key and a certificate system according to an embodiment of this application;
FIG. 13 is a diagram of key derivation and transmission according to an embodiment of this application;
FIG. 14 is an example a diagram of a structure of a user apparatus 1400 according to this application; and
FIG. 15 is an example a diagram of a structure of a monitoring apparatus 1500 according to this application.

### DESCRIPTION OF EMBODIMENTS

To make objectives, technical solutions, and advantages of this application clearer, the following clearly and completely describes the technical solutions in this application with reference to the accompanying drawings in this application. It is clear that the described embodiments are merely some rather than all of embodiments of this application. All other embodiments obtained by a person of ordinary skill in the art based on embodiments of this application without creative efforts shall fall within the protection scope of this application.

In the specification, embodiments, claims, and accompanying drawings of this application, the terms "first", "second", and the like are merely intended for distinguishing and description, and shall not be understood as indicating or implying relative importance, or indicating or implying a sequence. In addition, the terms "include", "have", and any variant thereof are intended to cover non-exclusive inclusion, for example, include a series of steps or units. A method, system, product, or device that includes a list of steps or units is not necessarily limited to those expressly listed steps or units, but may include other steps or units not expressly listed or inherent to such a process, method, product, or device.

It should be understood that, in this application, "at least one" means one or more, and "a plurality of" means two or more. The term "and/or" is used for describing an association relationship between associated objects, and represents that three relationships may exist. For example, "A and/or B" may represent the following three cases: Only A exists, only B exists, and both A and B exist, where A and B may be singular or plural. The character "/" generally indicates an "or" relationship between the associated objects. "At least one of the following items" or a similar expression means any combination of these items, including any combination of a single item or a plurality of items. For example, at least one item (piece) of a, b, or c may indicate a, b, c, "a and b", "a and c", "b and c", or "a, b, and c", where a, b, and c may be singular or plural.

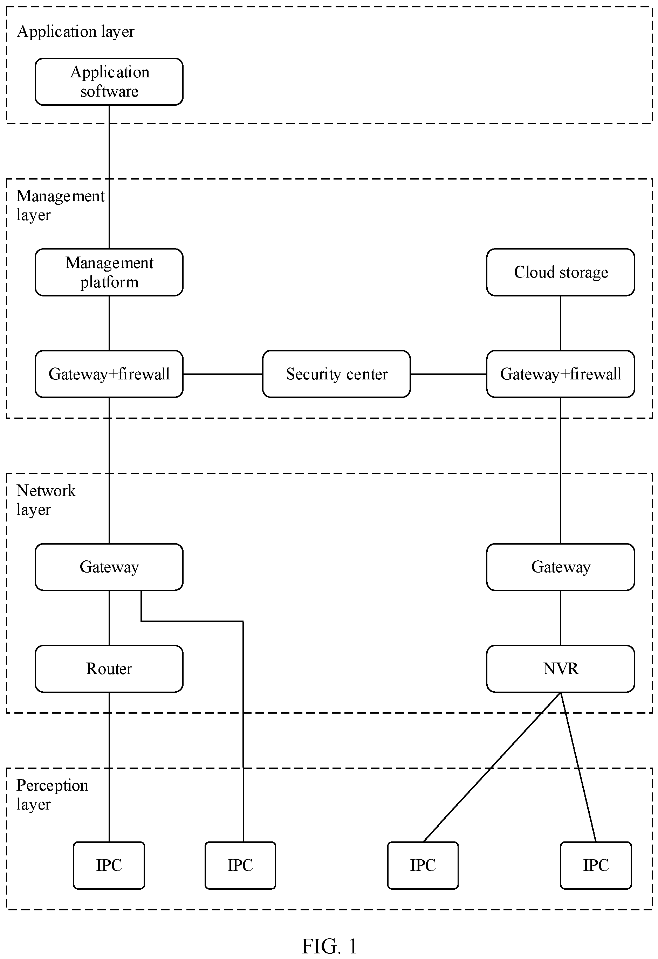

FIG. 1 is a diagram of a structure of internet of video things. As shown in FIG. 1, the internet of video things includes four layers from bottom to top: a perception layer, a network layer, a management layer, and an application layer. The perception layer includes various types of IPCs.

The network layer includes a router, gateways, a network video recorder (Network Video Recorder, NVR), and the like.

The management layer includes gateways and firewalls, a management platform, a security center, cloud storage, and the like.

The application layer includes application software running on user equipment such as a mobile phone, a computer, and a tablet computer.

Main features of the internet of video things include access of a large quantity of IPC terminals, large data traffic, a plurality of layers of networks, possibly across a plurality of cloud platforms, and the like. Therefore, how to ensure security of a video stream (including user privacy data) collected by the IPC during transmission, storage, and use on the entire network becomes a key technology to be resolved urgently.

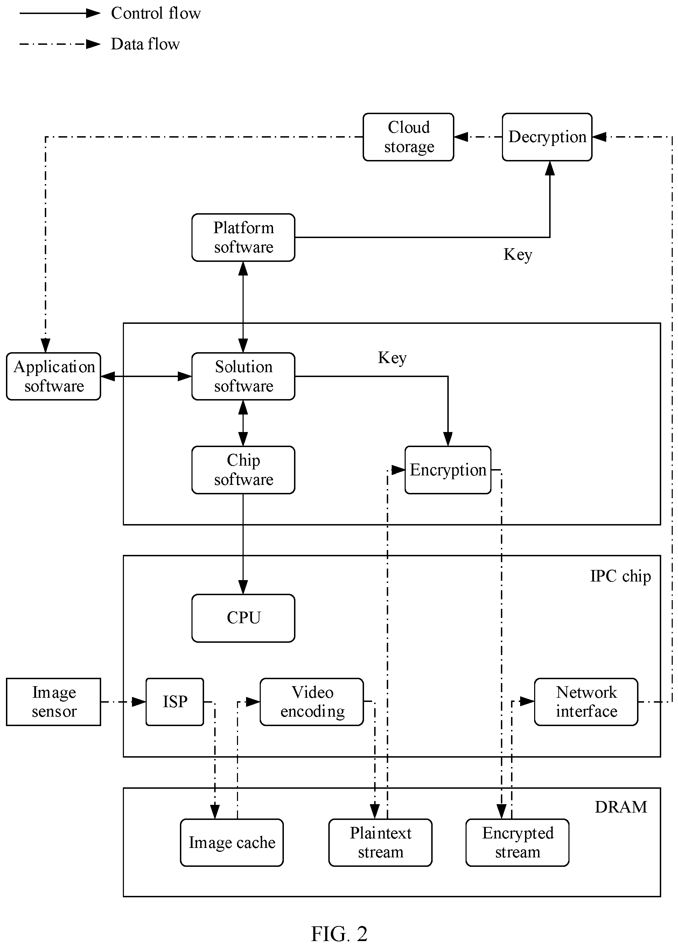

A related technology provides a privacy protection solution of internet of video things. As shown in FIG. 2 (FIG. 2 is a diagram of a privacy protection solution of existing internet of video things), application software running on user equipment is responsible for IPC configuration and provides an interface for a user operation, platform software running on a cloud platform is responsible for IPC and user management, solution software running on an IPC is responsible for interconnection between the platform software, the application software, and chip software, and the chip software running on the IPC is responsible for IPC chip management. An IPC chip provides hardware such as a central processing unit (central processing unit, CPU), an Internet service provider (Internet Service Provider, ISP), video encoding, and a network interface. An image sensor, namely, an original image acquisition unit, outputs digitized image information. A dynamic random access memory (Dynamic Random Access Memory, DRAM) provides a cache for data processing of the IPC chip.

Components such as the IPC chip, the image sensor, and the DRAM are collectively referred to as the IPC in the following. A procedure of the privacy protection solution may include:
(1) The platform software and the solution software negotiate a key.
(2) The solution software encrypts, on the IPC by using the key, a plaintext stream (namely, the video stream) obtained through video encoding, to obtain an encrypted stream (namely, an encrypted video stream).
(3) The platform software uses the key to decrypt the encrypted video stream on a cloud platform, to obtain the video stream and then store the video stream.
(4) The application software obtains the plaintext video stream from the cloud platform for playing.

However, in this privacy protection solution, the key is obtained through negotiation between the platform software and the solution software, and a user cannot control the key. The key for encrypting/decrypting the video stream is not protected additionally. As a result, the key is prone to leakage. The video stream is decrypted in the cloud and then stored, and the plaintext video stream is transmitted between the IPC and the user equipment. As a result, user privacy data is prone to leakage.

To resolve the foregoing technical problem, embodiments of this application provide a secure transmission method for a video stream and an apparatus. The following describes the technical solutions in embodiments of this application.

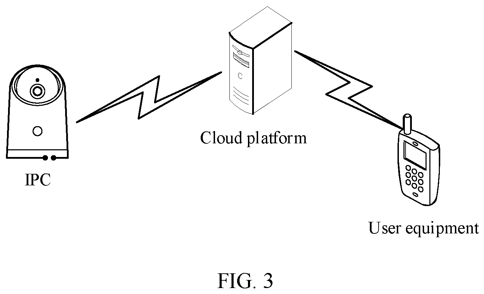

FIG. 3 is a diagram of an application scenario according to an embodiment of this application. As shown in FIG. 3, the application scenario includes user equipment, a cloud platform, and an IPC. The user equipment may be a device such as a mobile phone, a computer, or a tablet computer. A user may install application software on the user equipment, to establish a binding relationship with the IPC, and provide an interface for a user operation.

The cloud platform may provide a cloud storage service to store a video stream collected by the IPC and be responsible for managing the IPC and a user account.

The IPC may capture a monitoring video in a field of view, encode the monitoring video into the video stream, and send the video stream to the cloud platform for storage.

In this embodiment of this application, after capturing the video, the IPC performs video encoding on the video to obtain the video stream. To prevent leakage of user privacy data, the IPC encrypts the to-be-transmitted video stream based on a stream key and then sends an encrypted video stream to the cloud platform. The cloud platform stores the encrypted video stream from the IPC. When the user equipment requests a video from the cloud platform, the cloud platform obtains an encrypted video stream of the video, and then transmits the encrypted video stream to the user equipment. The user equipment receives the encrypted video stream, and may decrypt the encrypted video stream based on a stream key to obtain a plaintext of the video stream. Decoding processing is performed on the plaintext for playing. In this way, the encrypted video stream is transmitted between the IPC and the user equipment, which avoids leakage of the user privacy data.

In the foregoing process, with transmission of an encrypted stream, an encrypted stream key is further carried. In this way, the user equipment may obtain the stream key after decrypting the encrypted stream key, so that leakage of the stream key can be avoided.

It should be noted that the application scenario shown in FIG. 3 is an example of embodiments of this application. The application scenario may alternatively include more user equipment, cloud platforms, IPCs, and the like. A structure of the application scenario is not specifically limited in embodiments of this application.

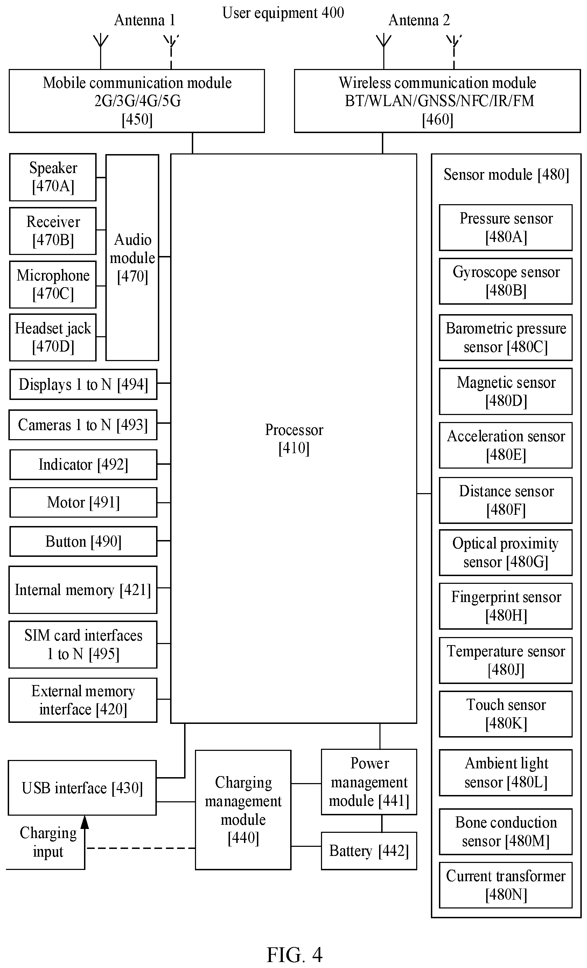

FIG. 4 is a diagram of a structure of user equipment 400. It needs to be understood that the user equipment 400 shown in FIG. 4 is merely an example of user equipment, and the user equipment 400 may have more or fewer components than those shown in the figure, or may combine two or more components, or may have different component configurations. The components shown in FIG. 4 may be implemented in hardware, software, or a combination of hardware and software including one or more signal processing and/or application-specific integrated circuits.

The user equipment 400 may include a processor 410, an external memory interface 420, an internal memory 421, a universal serial bus (universal serial bus, USB) interface 430, a charging management module 440, a power management module 441, a battery 442, an antenna 1, an antenna 2, a mobile communication module 450, a wireless communication module 460, an audio module 470, a speaker 470A, a receiver 470B, a microphone 470C, a headset jack 470D, a sensor module 480, a button 490, a motor 491, an indicator 492, a camera 493, a display 494, a subscriber identity module (subscriber identity module, SIM) card interface 495, and the like. The sensor module 480 may include a pressure sensor 480A, a gyroscope sensor 480B, a barometric pressure sensor 480C, a magnetic sensor 480D, an acceleration sensor 480E, a distance sensor 480F, an optical proximity sensor 480G, a fingerprint sensor 480H, a temperature sensor 480J, a touch sensor 480K, an ambient light sensor 480L, a bone conduction sensor 480M, a current transformer 480N, and the like.

The processor 410 may include one or more processing units. For example, the processor 410 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices, or may be integrated into one or more processors.

The controller may be a nerve center and a command center of the user equipment 400. The controller may generate an operation control signal based on an instruction operation code and a time sequence signal, to complete control of instruction fetching and instruction execution.

A memory may be further disposed in the processor 410, to store instructions and data. In some embodiments, the memory in the processor 410 is a cache memory. The memory may store instructions or data that has just been used or is cyclically used by the processor 410. If the processor 410 needs to use the instructions or data again, the processor 410 may invoke the instructions or data directly from the memory. This avoids repeated access, reduces waiting time of the processor 410, and improves system efficiency.

It may be understood that an interface connection relationship between the modules illustrated in this embodiment of this application is merely an example for description, and does not constitute a limitation on the structure of the user equipment 400. In some other embodiments of this application, the user equipment 400 may alternatively use an interface connection manner different from that in the foregoing embodiment, or use a combination of a plurality of interface connection manners.

The charging management module 440 is configured to receive a charging input from a charger. The charger may be a wireless charger or a wired charger. In some embodiments of wired charging, the charging management module 440 may receive a charging input from the wired charger through the USB interface 430. In some embodiments of wireless charging, the charging management module 440 may receive a wireless charging input through a wireless charging coil of the user equipment 400. When charging the battery 442, the charging management module 440 may further supply power to the user equipment through the power management module 441.

The power management module 441 is configured to connect to the battery 442, the charging management module 440, and the processor 410. The power management module 441 receives an input from the battery 442 and/or the charging management module 440, and supplies power to the processor 410, the internal memory 421, the external memory, the display 494, the camera 493, the wireless communication module 460, and the like. The power management module 441 may be further configured to monitor parameters such as a battery capacity, a battery cycle count, and a battery health status (electric leakage or impedance). In some other embodiments, the power management module 441 may alternatively be disposed in the processor 410. In some other embodiments, the power management module 441 and the charging management module 440 may alternatively be disposed in a same device.

A wireless communication function of the user equipment 400 may be implemented through the antenna 1, the antenna 2, the mobile communication module 450, the wireless communication module 460, the modem processor, the baseband processor, and the like.

The antenna 1 and the antenna 2 are configured to transmit and receive an electromagnetic wave signal. Each antenna in the user equipment 400 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 450 may provide a wireless communication solution that is applied to the user equipment 400 and that includes 2G, 3G, 4G, 5G, or the like. The mobile communication module 450 may include at least one filter, a switch, a power amplifier, a low noise amplifier (low noise amplifier, LNA), and the like. The mobile communication module 450 may receive an electromagnetic wave through the antenna 1, perform processing such as filtering and amplification on the received electromagnetic wave, and transmit a processed electromagnetic wave to the modem processor for demodulation. The mobile communication module 450 may further amplify a signal modulated by the modem processor, and convert the signal into an electromagnetic wave for radiation through the antenna 1. In some embodiments, at least some functional modules of the mobile communication module 450 may be disposed in the processor 410. In some embodiments, at least some functional modules of the mobile communication module 450 and at least some modules of the processor 410 may be disposed in a same device.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (not limited to the speaker 470A, the receiver 470B, or the like), or displays an image or a video on the display 494. In some embodiments, the modem processor may be an independent device. In some other embodiments, the modem processor may be independent of the processor 410, and is disposed in a same device with the mobile communication module 450 or another functional module.

The wireless communication module 460 may provide a wireless communication solution that is applied to the user equipment 400 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 460 may be one or more devices integrating at least one communication processor module. The wireless communication module 460 receives an electromagnetic wave through the antenna 2, performs frequency modulation and filtering processing on an electromagnetic wave signal, and sends a processed signal to the processor 410. The wireless communication module 460 may further receive a to-be-sent signal from the processor 410, perform frequency modulation and amplification on the signal, and convert the signal into an electromagnetic wave for radiation through the antenna 2.

In some embodiments, in the user equipment 400, the antenna 1 and the mobile communication module 450 are coupled, and the antenna 2 and the wireless communication module 460 are coupled, so that the user equipment 400 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The user equipment 400 implements a display function through the GPU, the display 494, the application processor, and the like. The GPU is a microprocessor for image processing, and is connected to the display 494 and the application processor. The GPU is configured to: perform mathematical and geometric computation, and render an image. The processor 410 may include one or more GPUs that execute program instructions to generate or change display information.

The display 494 is configured to display an image, a video, and the like. The display 494 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, or a quantum dot light-emitting diode (quantum dot light-emitting diode, QLED), or the like. In some embodiments, the user equipment 400 may include one or N displays 494, where N is a positive integer greater than 1.

The user equipment 400 may implement a photographing function through the ISP, the camera 493, the video codec, the GPU, the display 494, the application processor, and the like.

The ISP is configured to process data fed back by the camera 493. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 493. The camera 493 is configured to capture a still image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the user equipment 400 may include one or N cameras 493, where N is a positive integer greater than 1.

The digital signal processor is configured to process a digital signal, and may process another digital signal in addition to the digital image signal. For example, when the user equipment 400 performs frequency selection, the digital signal processor is configured to perform Fourier transform and the like on frequency energy.

The video codec is configured to compress or decompress a digital video. The user equipment 400 may support one or more video codecs. In this way, the user equipment 400 may play or record videos in a plurality of encoding formats, for example, moving picture experts group (moving picture experts group, MPEG) 1, MPEG 2, MPEG 3, and MPEG 4.

The NPU is a neural-network (neural-network, NN) computing processor. The NPU quickly processes input information with reference to a structure of a biological neural network, for example, a transfer mode between human brain neurons, and may further continuously perform self-learning. The NPU may be used to implement an application like intelligent cognition of the user equipment 400, for example, image recognition, facial recognition, voice recognition, and text understanding.

The external memory interface 420 may be configured to connect to an external memory card, for example, a micro SD card, to extend a storage capability of the user equipment 400. An external storage card communicates with the processor 410 through the external memory interface 420, to implement a data storage function. For example, files such as music and videos are stored in the external storage card.

The internal memory 421 may be configured to store computer-executable program code. The executable program code includes instructions. The processor 410 runs the instructions stored in the internal memory 421, to perform various functional applications and data processing of the user equipment 400. The internal memory 421 may include a program storage area and a data storage area. The program storage area may store an operating system, an application required for at least one function (such as a sound play function and an image play function), and the like. The data storage area may store data (such as audio data and a phone book) and the like created during use of the user equipment 400. In addition, the internal memory 421 may include a high-speed random access memory, or may include a non-volatile memory, for example, at least one magnetic disk storage device, a flash memory device, or a universal flash storage (universal flash storage, UFS).

The user equipment 400 may implement an audio function, for example, music play or recording, by using the audio module 470, the speaker 470A, the receiver 470B, the microphone 470C, the headset jack 470D, the application processor, and the like.

The audio module 470 is configured to convert digital audio information into an analog audio signal for output, and is also configured to convert an analog audio input into a digital audio signal. The audio module 470 may further be configured to encode and decode an audio signal. In some embodiments, the audio module 470 may be disposed in the processor 410, or some functional modules of the audio module 470 may be disposed in the processor 410.

The speaker 470A, also referred to as a "loudspeaker", is configured to convert an audio electrical signal into a sound signal. The user equipment 400 may be used to listen to music or answer a call in a hands-free mode over the speaker 470A.

The receiver 470B, also referred to as an "earpiece", is configured to convert an audio electrical signal into a sound signal. When a call is answered or voice information is received through the user equipment 400, the receiver 470B may be put close to a human ear to listen to a voice.

The microphone 470C, also referred to as a "mike" or a "mic", is configured to convert a sound signal into an electrical signal. When making a call or sending voice information, a user may make a sound by using a human mouth close to the microphone 470C, and input a sound signal to the microphone 470C. At least one microphone 470C may be disposed in the user equipment 400. In some other embodiments, two microphones 470C may be disposed in the user equipment 400, to collect a sound signal and implement a noise reduction function. In some other embodiments, three, four, or more microphones 470C may alternatively be disposed in the user equipment 400, to collect a sound signal, implement noise reduction, further recognize a sound source, implement a directional recording function, and the like. The headset jack 470D is configured to connect to a wired headset. The headset jack 470D may be the USB interface 430, or may be a 3.5 mm open mobile terminal platform (open mobile terminal platform, OMTP) standard interface, or a cellular telecommunications industry association of the USA (cellular telecommunications industry association of the USA, CTIA) standard interface.

The pressure sensor 480A is configured to sense a pressure signal, and can convert the pressure signal into an electrical signal. In some embodiments, the pressure sensor 480A may be disposed on the display 494. There are a plurality of types of pressure sensors 480A, such as a resistive pressure sensor, an inductive pressure sensor, and a capacitive pressure sensor. The capacitive pressure sensor may include at least two parallel plates made of conductive materials. When a force is applied to the pressure sensor 480A, capacitance between electrodes changes. The user equipment 400 determines pressure strength based on the change of the capacitance. When a touch operation is performed on the display 494, the user equipment 400 detects strength of the touch operation through the pressure sensor 480A. The user equipment 400 may calculate a touch position based on a detection signal of the pressure sensor 480A. In some embodiments, touch operations that are performed in a same touch position but have different touch operation strength may correspond to different operation instructions. For example, when a touch operation whose touch operation strength is less than a first pressure threshold is performed on an SMS message application icon, an instruction for viewing an SMS message is performed. When a touch operation whose touch operation strength is greater than or equal to the first pressure threshold is performed on an SMS message application icon, an instruction for creating a new SMS message is performed.

The gyroscope sensor 480B may be configured to determine a motion posture of the user equipment 400. In some embodiments, the gyroscope sensor 480B may be used to determine angular velocities of the user equipment 400 around three axes (namely, axes x, y, and z). The gyroscope sensor 480B may be used for image stabilization during photographing. For example, when the shutter is pressed, the gyroscope sensor 480B detects a shake angle of the user equipment 400, calculates, based on the angle, a distance for which a lens module needs to compensate, and enables the lens to offset shake of the user equipment 400 through reverse motion, so as to implement image stabilization. The gyroscope sensor 480B may be further used in a navigation scenario and a somatic game scenario.

The barometric pressure sensor 480C is configured to measure barometric pressure. In some embodiments, the user equipment 400 calculates an altitude based on a barometric pressure value measured by the barometric pressure sensor 480C, to assist in positioning and navigation.

The magnetic sensor 480D includes a Hall sensor. The user equipment 400 may detect opening and closing of a leather case of a flip cover by using the magnetic sensor 480D. In some embodiments, when the user equipment 400 is a flip phone, the user equipment 400 may detect opening and closing of a flip cover by using the magnetic sensor 480D. Further, a feature such as automatic unlocking of the flip cover is set based on a detected opening or closing state of the leather case or a detected opening or closing state of the flip cover.

The acceleration sensor 480E may detect magnitudes of accelerations of the user equipment 400 in various directions (usually on three axes). When the user equipment 400 is static, the acceleration sensor 480E may detect a magnitude and a direction of gravity. The acceleration sensor 480E may be further configured to identify a posture of the user equipment, and is used in an application such as switching between a landscape mode and a portrait mode or a pedometer.

The distance sensor 480F is configured to measure a distance. The user equipment 400 may measure a distance through infrared light or a laser. In some embodiments, in a photographing scenario, the user equipment 400 may measure a distance by using the distance sensor 480F, to implement quick focusing.

The optical proximity sensor 480G may include, for example, a light-emitting diode (LED) and a light detector such as a photodiode. The light-emitting diode may be an infrared light-emitting diode. The user equipment 400 emits infrared light by using the light-emitting diode. The user equipment 400 detects infrared reflected light from a nearby body by using the photodiode. When abundant reflected light is detected, it may be determined that there is an object near the user equipment 400. When detecting insufficient reflected light, the user equipment 400 may determine that there is no object near the user equipment 400. The user equipment 400 may detect, by using the optical proximity sensor 480G, that a user holds the user equipment 400 close to the ear for a call, to automatically turn off a screen to save power. The optical proximity sensor 480G may also be used in a smart cover mode or a pocket mode to automatically perform screen unlocking or locking.

The ambient light sensor 480L is configured to sense ambient light brightness. The user equipment 400 may adaptively adjust brightness of the display 494 based on the sensed ambient light brightness. The ambient light sensor 480L may also be configured to automatically adjust a white balance during photographing. The ambient light sensor 480L may further cooperate with the optical proximity sensor 480G to detect whether the user equipment 400 is in a pocket, to prevent an accidental touch.

The fingerprint sensor 480H is configured to collect a fingerprint. The user equipment 400 may implement fingerprint unlock, application access lock, fingerprint photographing, fingerprint-based call answering, and the like by using a feature of the collected fingerprint.

The temperature sensor 480J is configured to detect a temperature. In some embodiments, the user equipment 400 executes a temperature processing strategy based on the temperature detected by the temperature sensor 480J. For example, when the temperature reported by the temperature sensor 480J exceeds a threshold, the user equipment 400 lowers performance of a processor near the temperature sensor 480J, to reduce power consumption and implement thermal protection. In some other embodiments, when the temperature is lower than another threshold, the user equipment 400 heats the battery 442 to avoid abnormal shutdown of the user equipment 400 that is caused due to the low temperature. In some other embodiments, when the temperature is lower than still another threshold, the user equipment 400 boosts an output voltage of the battery 442, to avoid abnormal shutdown caused by the low temperature. The touch sensor 480K is also referred to as a "touch panel". The touch sensor 480K may be disposed on the display 494. The touch sensor 480K and the display 494 form a touchscreen, which is also referred to as a "touch screen". The touch sensor 480K is configured to detect a touch operation performed on or near the touch sensor. The touch sensor may transfer the detected touch operation to the application processor to determine a type of a touch event. A visual output related to the touch operation may be provided on the display 494. In some other embodiments, the touch sensor 480K may alternatively be disposed on a surface of the user equipment 400 at a position different from a position of the display 494.

The bone conduction sensor 480M may obtain a vibration signal. In some embodiments, the bone conduction sensor 480M may obtain a vibration signal of a vibration bone of a human vocal-cord part. The bone conduction sensor 480M may also be in contact with a human pulse, and receive a blood pressure beating signal. In some embodiments, the bone conduction sensor 480M may also be disposed in the headset, to obtain a bone conduction headset. The audio module 470 may obtain a voice signal through parsing based on the vibration signal, of the vibration bone of the vocal-cord part, that is obtained by the bone conduction sensor 480M, to implement a voice function. The application processor may parse heart rate information based on the blood pressure beating signal obtained by the bone conduction sensor 480M, to implement a heart rate detection function.

The current transformer 480N may obtain current data. For example, a Hall current transformer is configured to collect a single-phase or three-phase current of a motor. For example, for a fan whose rated current is 7 A, an input current of an A/D converter is -5 A to 5 A, and a closed-port current transformer whose conversion ratio is 10/5 may be selected for collection. A sampling frequency may be at least 2*quantity of pole-pairs*maximum rotating speed. For example, if the maximum rotating speed of the fan is 1800 rpm (that is, 30 Hz), and the quantity of pole-pairs is 5, a recommended sampling frequency is at least 2*5*30=300 Hz. To collect more valid information, the sampling frequency may be set to 512 Hz, 1024 Hz, or the like.

The button 490 includes a power button, a volume button, or the like. The button 490 may be a mechanical button, or may be a touch-sensitive button. The user equipment 400 may receive a button input, and generate a button signal input related to user setting and function control of the user equipment 400.

The motor 491 may generate a vibration prompt. The motor 491 may be configured to provide an incoming call vibration prompt and a touch vibration feedback. For example, touch operations performed on different applications (for example, photographing and audio play) may correspond to different vibration feedback effect. The motor 491 may also correspond to different vibration feedback effect for touch operations performed on different areas of the display 494. Different application scenarios (for example, a time reminder, information receiving, an alarm clock, and a game) may also correspond to different vibration feedback effect. The touch vibration feedback effect may be further customized.

The indicator 492 may be an indicator light, and may be configured to indicate a charging status and a power change, or may be configured to indicate a message, a missed call, a notification, and the like.

The SIM card interface 495 is configured to connect to a SIM card. The SIM card may be inserted into the SIM card interface 495 or removed from the SIM card interface 495, so that the SIM card is in contact with or separated from the user equipment 400. The user equipment 400 may support one or N SIM card interfaces, where N is a positive integer greater than 1. The SIM card interface 495 may support a nano-SIM card, a micro-SIM card, a SIM card, and the like. A plurality of cards may be inserted into a same SIM card interface 495 at the same time. The plurality of cards may be of a same type or different types. The SIM card interface 495 may also be compatible with different types of SIM cards. The SIM card interface 495 may also be compatible with the external storage card. The user equipment 400 interacts with a network through the SIM card, to implement functions such as calling and data communication. In some embodiments, the user equipment 400 uses an eSIM, that is, an embedded SIM card. The eSIM card may be embedded in the user equipment 400, and cannot be separated from the user equipment 400.

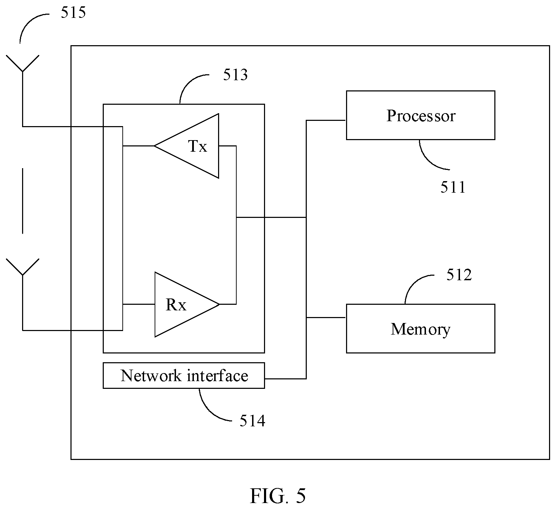

FIG. 5 is a diagram of a structure of a cloud platform 500. As shown in FIG. 5, the cloud platform 500 includes at least one processor 511, at least one memory 512, at least one transceiver 513, at least one network interface 514, and one or more antennas 515. The processor 511, the memory 512, the transceiver 513, and the network interface 514 are connected, for example, connected through a bus. In this embodiment of this application, connections may include various interfaces, transmission lines, buses, or the like. This is not limited in this embodiment. The antenna 515 is connected to the transceiver 513. The network interface 514 is configured to enable the cloud platform 500 to connect to another device through a communication link. For example, the network interface 514 may include a network interface between the cloud platform and user equipment or an IPC, for example, an S1 interface, an X2 interface, or an Xn interface.

The processor 511 is mainly configured to: process a communication protocol and communication data, control the entire cloud platform 500, execute a software program, and process data of the software program, for example, configured to support the cloud platform 500 in performing actions described in embodiments. The cloud platform 500 may include a baseband processor 511 and a central processing unit 511. The baseband processor 511 is mainly configured to process the communication protocol and the communication data. The central processing unit 511 is mainly configured to: control the entire cloud platform 500, execute the software program, and process the data of the software program. The processor 511 in FIG. 5 may integrate functions of the baseband processor 511 and the central processing unit 511. A person skilled in the art may understand that, alternatively, the baseband processor 511 and the central processing unit 511 may be independent processors 511, and interconnected by using a technology such as a bus. A person skilled in the art may understand that the cloud platform 500 may include a plurality of baseband processors 511 to adapt to different network standards, the cloud platform 500 may include a plurality of central processing units 511 to enhance a processing capability of the cloud platform 500, and components of the cloud platform 500 may be connected through various buses. The baseband processor 511 may alternatively be expressed as a baseband processing circuit or a baseband processing chip. The central processing unit 511 may alternatively be expressed as a central processing circuit or a central processing chip. A function of processing the communication protocol and the communication data may be built into the processor 511, or may be stored in the memory 512 in a form of software program, so that the processor 511 executes the software program to implement a baseband processing function.

The memory 512 is mainly configured to store the software program and a video stream. The memory 512 may exist independently and is connected to the processor 511. Optionally, the memory 512 may be integrated with the processor 511, for example, integrated into a chip. The memory 512 can store program code for performing the technical solutions in embodiments of this application, and the processor 511 controls execution of the program code. Various types of executed computer program code may also be considered as drivers of the processor 511.

FIG. 5 shows only one memory 512 and one processor 511. In the actual cloud platform 500, there may be a plurality of processors 511 and a plurality of memories 512. The memory 512 may also be referred to as a storage medium, a storage device, or the like. The memory 512 may be a storage element on a same chip as the processor 511, that is, an on-chip storage element, or may be an independent storage element. This is not limited in this embodiment of this application.

The transceiver 513 may be configured to support receiving or sending of a radio frequency signal between the cloud platform 500 and a terminal. The transceiver 513 may be connected to the antenna 515. The transceiver 513 includes a transmitter Tx and a receiver Rx. Specifically, the one or more antennas 515 may receive a radio frequency signal. The receiver Rx of the transceiver 513 is configured to: receive the radio frequency signal from the antenna, convert the radio frequency signal into a digital baseband signal or a digital intermediate frequency signal, and provide the digital baseband signal or the digital intermediate frequency signal for the processor 511, so that the processor 511 further processes, for example, demodulates or decodes, the digital baseband signal or the digital intermediate frequency signal. In addition, the transmitter Tx of the transceiver 513 is further configured to: receive a modulated digital baseband signal or digital intermediate frequency signal from the processor 511, convert the modulated digital baseband signal or digital intermediate frequency signal into a radio frequency signal, and send the radio frequency signal through the one or more antennas 515. Specifically, the receiver Rx may selectively perform one or more levels of down-mixing processing and analog-to-digital conversion processing on the radio frequency signal to obtain the digital baseband signal or the digital intermediate frequency signal. A sequence of the down-mixing processing and the analog-to-digital conversion processing is adjustable. The transmitter Tx may selectively perform one or more levels of up-mixing processing and digital-to-analog conversion processing on the modulated digital baseband signal or digital intermediate frequency signal to obtain the radio frequency signal. A sequence of the up-mixing processing and the digital-to-analog conversion processing is adjustable. The digital baseband signal and the digital intermediate frequency signal may be collectively referred to as a digital signal.

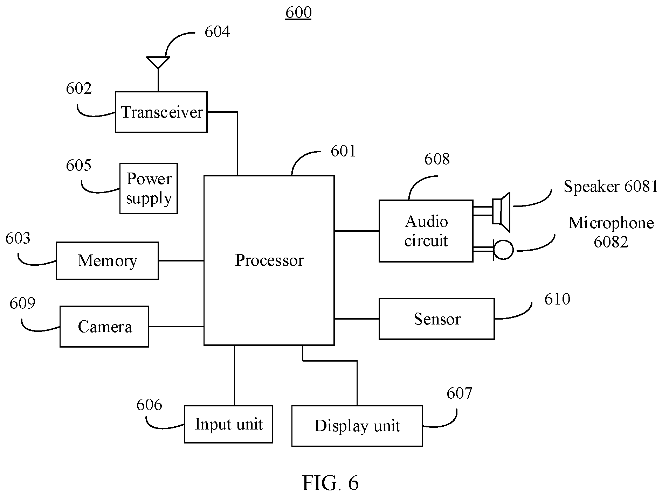

The transceiver 513 may also be referred to as a transceiver unit, a transceiver machine, a transceiver apparatus, or the like. Optionally, a device that is in the transceiver unit and that is configured to implement a receiving function may be considered as a receiving unit, and a device that is in the transceiver unit and that is configured to implement a sending function may be considered as a sending unit. In other words, the transceiver unit includes the receiving unit and the sending unit. The receiving unit may also be referred to as a receiver, an input port, a receiving circuit, or the like. The sending unit may be referred to as a transmitter, a transmitter machine, a transmitter circuit, or the like. FIG. 6 is a diagram of a structure of an IPC 600. As shown in FIG. 6, the IPC 600 includes a processor 601 and a transceiver 602.

Optionally, the IPC 600 further includes a memory 603. The processor 601, the transceiver 602, and the memory 603 may communicate with each other through an internal connection path, to transfer a control signal and/or a data signal. The memory 603 is configured to store a computer program. The processor 601 is configured to execute the computer program stored in the memory 603, to implement functions of the IPC 600 in this embodiment.

Optionally, the memory 603 may alternatively be integrated into the processor 601 or independent of the processor 601.

The IPC 600 may further include one or more of an input unit 606, a display unit 607 (which may also be considered as an output unit), an audio circuit 608, a camera 609, a sensor 610, and the like. The audio circuit may further include a speaker 6081, a microphone 6082, and the like. Details are not described herein.

Optionally, the IPC 600 may further include an antenna 604 configured to transmit a signal output by the transceiver 602. Alternatively, the transceiver 602 receives a signal through the antenna.

Optionally, the IPC 600 may further include a power supply 605 configured to supply power to various devices or circuits in the IPC.

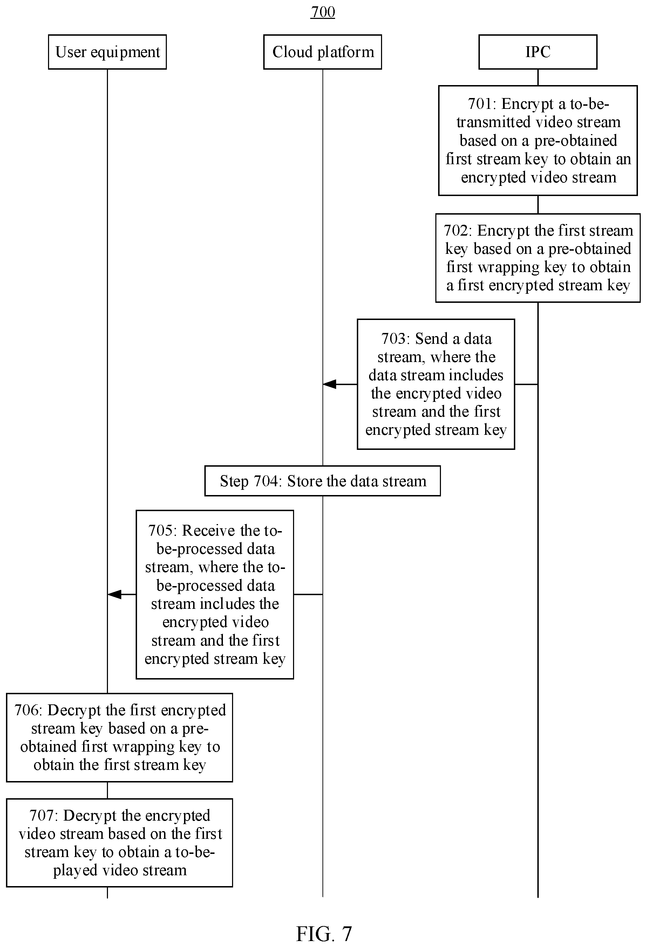

Based on the foregoing embodiment, FIG. 7 is a flowchart of a process 700 of a secure transmission method for a video stream according to an embodiment of this application. As shown in FIG. 7, the process 700 may be applied to the application scenario shown in FIG. 3, and is jointly performed by user equipment, an IPC, and a cloud platform to complete transmission of the video stream between the IPC, the cloud platform, and the user equipment, so that a monitoring video captured by the IPC is played on the user equipment. The process 700 is described as a series of steps or operations. It should be understood that the process 700 may be performed in various sequences and/or simultaneously, and is not limited to an execution sequence shown in FIG. 7. The process 700 includes the following steps.

Step 701: The IPC encrypts a to-be-transmitted video stream based on a pre-obtained first stream key to obtain an encrypted video stream.

The first stream key is used to encrypt the video stream. In this embodiment of this application, the first stream key may be generated based on a binding procedure between the user equipment and the IPC. The foregoing binding procedure is described in the following embodiment.

The IPC captures a monitoring video in a field of view and performs video encoding on the video to obtain the video stream. To avoid leakage of user privacy data, the IPC may first encrypt the to-be-transmitted video stream, then transmit the encrypted video stream to the cloud platform for storage, and transmit the encrypted video stream to the user equipment for decryption and playing.

Optionally, the IPC may encrypt the to-be-transmitted video stream based on the first stream key by using an algorithm such as advanced encryption standard (Advanced Encryption Standard, AES), treble data encryption standard (Treble Data Encryption Standard, TDES), or SM4.

Step 702: The IPC encrypts the first stream key based on a pre-obtained first wrapping key to obtain a first encrypted stream key.

The first wrapping key is used to encrypt the first stream key. In this embodiment of this application, the first wrapping key may be generated based on the binding procedure between the user equipment and the IPC.

To avoid leakage of the stream key, the IPC may first encrypt the first stream key, then transmit the first encrypted stream key to the cloud platform for storage, and transmit the first encrypted stream key to the user equipment, which is decrypted and then used for decrypting the encrypted video stream.

Optionally, the IPC may encrypt the first stream key based on the first wrapping key by using a symmetric encryption algorithm. The symmetric encryption algorithm may include the AES, the TDES, the SM4, and the like.

Step 703: The IPC sends a data stream to the cloud platform, where the data stream includes the encrypted video stream and the first encrypted stream key.

As a video stream storage platform, the cloud platform may locally store a plurality of encrypted video streams from a plurality of IPCs. When the user equipment requests a video, the cloud platform sends a corresponding encrypted video stream to the user equipment. Therefore, the IPC may send the data stream to the cloud platform, where the data stream includes the encrypted video stream obtained through encryption in step 701. In addition, in order to help the user equipment decrypt the encrypted video stream, the data stream further includes the first encrypted stream key obtained through encryption in step 702.

Step 704: The cloud platform stores the data stream.

After receiving the data stream from the IPC, the cloud platform locally stores the data stream.

Step 705: The user equipment receives the to-be-processed data stream sent by the cloud platform, where the to-be-processed data stream includes the encrypted video stream and the first encrypted stream key.

A user may use a video application (application, APP) on the user equipment to select a video that the user wants to play, and then the video APP may request the corresponding video from the cloud platform in response to the user's selection. After receiving a request message of the video APP, the cloud platform may select a corresponding encrypted video stream from the plurality of locally stored encrypted video streams, and then send the encrypted video stream to the user equipment. The to-be-processed data stream received by the user equipment may be one or more of a plurality of data streams stored on the cloud platform. That is, in addition to the encrypted video stream corresponding to the requested video, the to-be-processed data stream further includes an encrypted stream key (the first encrypted stream key) of the encrypted video stream.

Step 706: The user equipment decrypts the first encrypted stream key based on the pre-obtained first wrapping key to obtain the first stream key.

The first wrapping key is used to decrypt the first encrypted stream key. In this embodiment of this application, the first wrapping key may be generated based on the binding procedure between the user equipment and the IPC.

The to-be-processed data stream received by the user equipment includes the first encrypted stream key for decryption. Therefore, after obtaining the first wrapping key, the user equipment may decrypt the first encrypted stream key based on the first wrapping key by using a symmetric decryption algorithm. The symmetric decryption algorithm may be a decryption algorithm corresponding to the symmetric encryption algorithm in step 702.

Step 707: The user equipment decrypts the encrypted video stream based on the first stream key to obtain a to-be-played video stream.

The first stream key is used to decrypt the encrypted video stream. In this embodiment of this application, the first stream key may be generated based on the binding procedure between the user equipment and the IPC.

The to-be-processed data stream received by the user equipment further includes the encrypted video stream. Therefore, after obtaining the first stream key, the user equipment may decrypt the encrypted video stream based on the first stream key, and a used algorithm may be a decryption algorithm corresponding to the algorithm in step 701. Then, the user equipment may perform video decompression on the to-be-played video stream obtained through decryption, to obtain a reconstructed video, and play the reconstructed video.

In this embodiment of this application, the encrypted video stream and the encrypted stream key are transmitted between the IPC and the cloud platform, and between the cloud platform and the user equipment. The video stream (including the user privacy data) can be encrypted and transmitted, to avoid leakage of the user privacy data. In addition, the stream key can be encrypted and transmitted, to avoid leakage of the stream key.

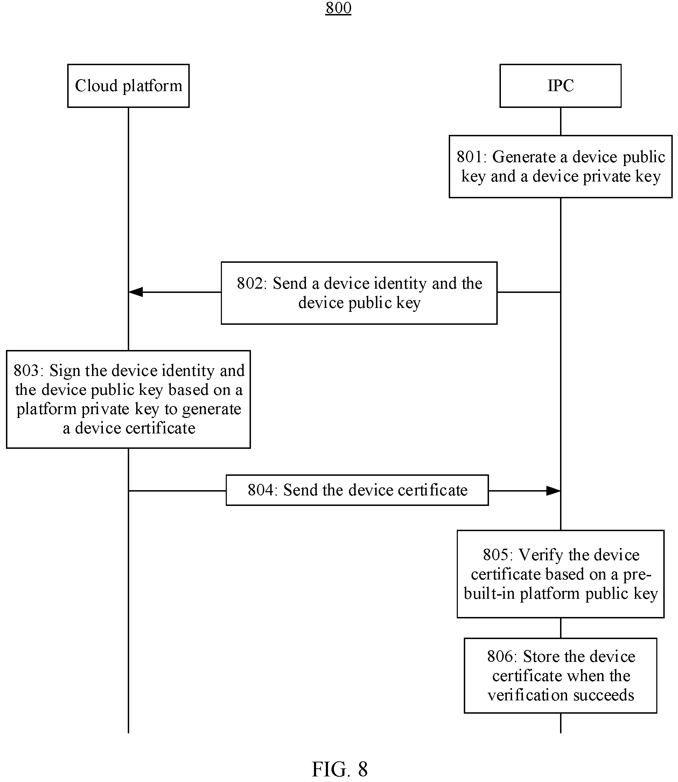

FIG. 8 is a flowchart of a process 800 of a secure transmission method for a video stream according to an embodiment of this application. As shown in FIG. 8, the process 800 may be applied to the application scenario shown in FIG. 3, and is jointly performed by an IPC and a cloud platform to complete registration of the IPC on the cloud platform. The process 800 is described as a series of steps or operations. It should be understood that the process 800 may be performed in various sequences and/or simultaneously, and is not limited to an execution sequence shown in FIG. 8. The process 800 includes the following steps.

Step 801: The IPC generates a device public key and a device private key.

The device identity (identity, ID) is written into IPC firmware by a vendor of the IPC at delivery. During initial configuration, the IPC may register with the cloud platform. The device public key and the device private key are generated first, and may be generated by using a standard key generation algorithm.

Step 802: The IPC sends a device identity and the device public key to the cloud platform.

The IPC sends the device ID and the generated device public key to the cloud platform.

Step 803: The cloud platform signs the device identity and the device public key based on a platform private key to generate a device certificate.

The cloud platform signs the device public key and the device ID based on the platform private key to generate the device certificate, and registers the IPC.

Step 804: The cloud platform sends the device certificate to the IPC.

Step 805: The IPC verifies the device certificate based on a pre-built-in platform public key.

The platform private key and the platform public key are pre-generated by the cloud platform. When the IPC is at delivery, the vendor writes the platform public key of the cloud platform into the IPC. In this way, the IPC may verify the received device certificate based on the built-in platform public key.

Step 806: The IPC stores the device certificate when the verification succeeds.

Based on the foregoing IPC registration process, the IPC has the device certificate signed by the cloud platform, and the cloud platform also obtains information (including the device ID and the device public key of the IPC) about the IPC, to manage and maintain the IPC and video data of the IPC.

Optionally, the user equipment may also register with the cloud platform with reference to the steps in the process 800. A difference lies in that the user equipment may generate a user public key and a user private key based on a user ID, and send the user identity and the user public key to the cloud platform, and the cloud platform signs the user ID and the user public key based on the platform private key to generate a user certificate.

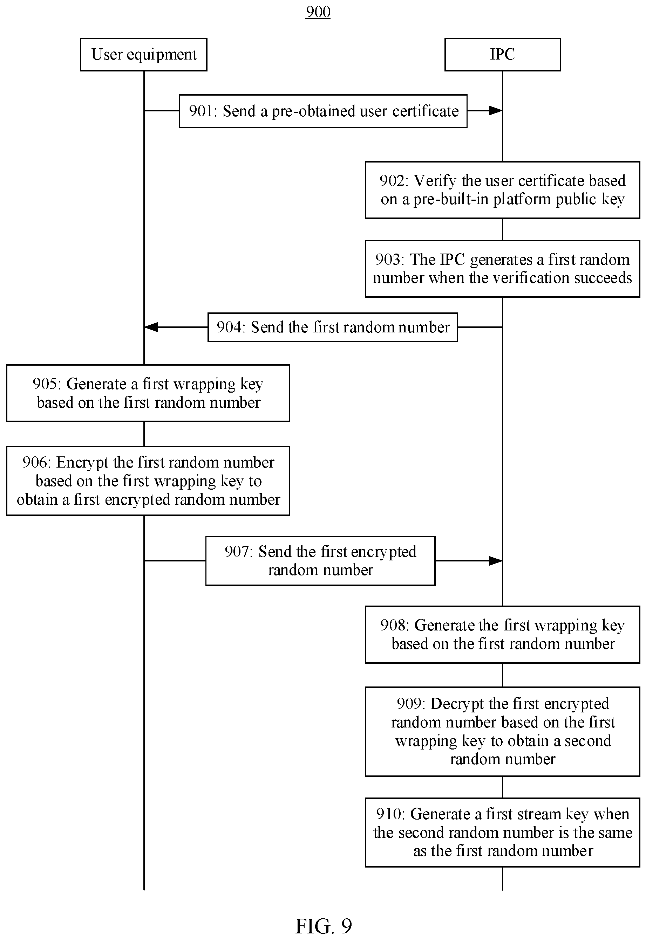

FIG. 9 is a flowchart of a process 900 of a secure transmission method for a video stream according to an embodiment of this application. As shown in FIG. 9, the process 900 may be applied to the application scenario shown in FIG. 3, and is jointly performed by an IPC and user equipment to complete binding between the IPC and the user equipment. The process 900 is described as a series of steps or operations. It should be understood that the process 900 may be performed in various sequences and/or simultaneously, and is not limited to an execution sequence shown in FIG. 9. The process 900 includes the following steps.

Step 901: The user equipment sends a pre-obtained user certificate to the IPC.

The user equipment may obtain the user certificate in the foregoing method. When initiating a binding request for the IPC, the user equipment may send the user certificate to the IPC.

Step 902: The IPC verifies the user certificate based on a pre-built-in platform public key.

As described above, the user certificate and a device certificate are both obtained by the cloud platform through signing based on a platform private key, and therefore may both be verified by using the platform public key.

Step 903: The IPC generates a first random number when the verification succeeds.

Step 904: The IPC sends the first random number to the user equipment.

Step 905: The user equipment generates a first wrapping key based on the first random number.

The user equipment may first obtain a shared key shared with the IPC, and then obtain the first wrapping key based on the first random number and the shared key by using a key derivation function (Key Derivation Function, KDF). The KDF may be, for example, a password-based key derivation function 2 (Password-Based Key Derivation Function 2, PBKDF2), and may use the shared key as a password (Password) and use the first random number as a salt, to obtain the first wrapping key by using a hash (Hash) operation. Alternatively, the KDF may be, for example, a hash-based message authentication code (Hash-based Message Authentication Code, HMAC)-based KDF (HMAC-based KDF, HKDF), and may use the shared key as an HMAC key and use the first random number as an input, to obtain the first wrapping key by using an HMAC operation.

In a possible implementation, the user equipment may receive the device certificate sent by the IPC, obtain the device public key of the IPC based on the device certificate, and obtain the shared key based on the device public key and the pre-obtained user private key by using a key exchange algorithm (Diffie Hellman Key Agreement, DHKA). An asymmetric algorithm used by the DHKA may be, for example, an RSA encryption algorithm (RSA algorithm), or ECC or SM2.

In this way, the first wrapping key is associated with the user ID, and the user equipment may also master the key. Step 906: The user equipment encrypts the first random number based on the first wrapping key to obtain a first encrypted random number.

Step 907: The user equipment sends the first encrypted random number to the IPC.

Step 908: The IPC generates the first wrapping key based on the first random number.

For a method for generating the first wrapping key by the IPC, refer to step 905. Details are not described herein again. Step 909: The IPC decrypts the first encrypted random number based on the first wrapping key to obtain a second random number.

Step 910: The IPC generates a first stream key when the second random number is the same as the first random number. Based on the foregoing binding process, the IPC and the user equipment both have the first wrapping key, and the IPC generates the first stream key for the user equipment, so that a subsequent video stream transmission process can be performed.

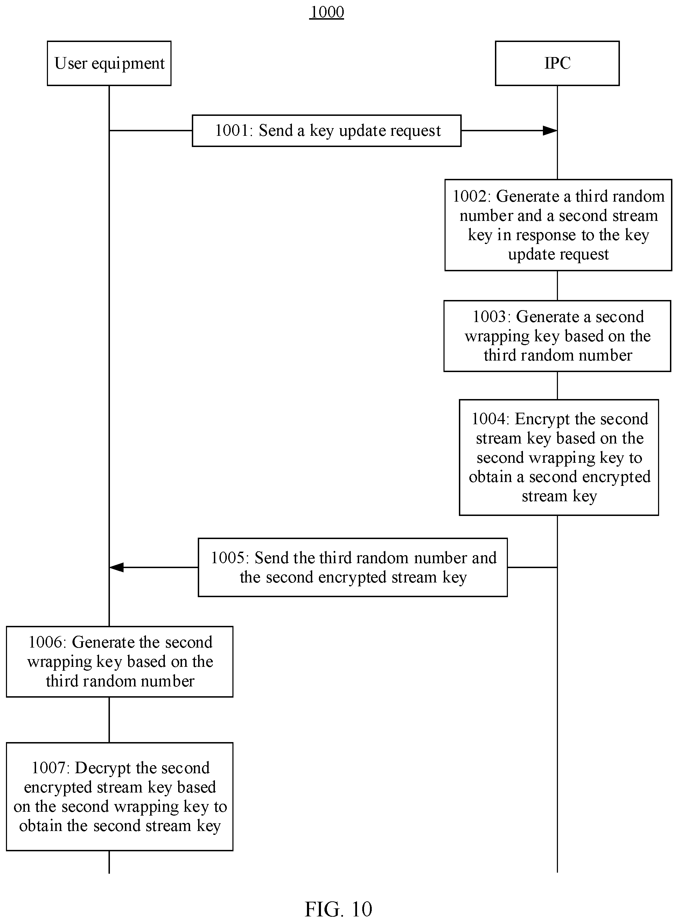

FIG. 10 is a flowchart of a process 1000 of a secure transmission method for a video stream according to an embodiment of this application. As shown in FIG. 10, the process 1000 may be applied to the application scenario shown in FIG. 3, and is jointly performed by an IPC and user equipment to complete update of a stream key. The process 1000 is described as a series of steps or operations. It should be understood that the process 1000 may be performed in various sequences and/or simultaneously, and is not limited to an execution sequence shown in FIG. 10. The process 1000 includes the following steps.

Step 1001: The user equipment sends a key update request to the IPC.

When a network address of the user equipment changes, or the user equipment establishes a new binding relationship with the IPC, or in another case requiring a key update, the user equipment may send the key update request to the IPC to initiate a key update process.

Step 1002: The IPC generates a third random number and a second stream key in response to the key update request. Step 1003: The IPC generates a second wrapping key based on the third random number.

For a method for generating the second wrapping key by the IPC, refer to step 905. Details are not described herein again.

Step 1004: The IPC encrypts the second stream key based on the second wrapping key to obtain a second encrypted stream key.

Step 1005: The IPC sends the third random number and the second encrypted stream key to the user equipment.

Step 1006: The user equipment generates the second wrapping key based on the third random number.

For a method for generating the second wrapping key by the user equipment, refer to step 905. Details are not described herein again.

Step 1007: The user equipment decrypts the second encrypted stream key based on the second wrapping key to obtain the second stream key.

Based on the foregoing key update process, the IPC and the user equipment both have the updated second stream key, so that a subsequent video stream transmission process can be performed.

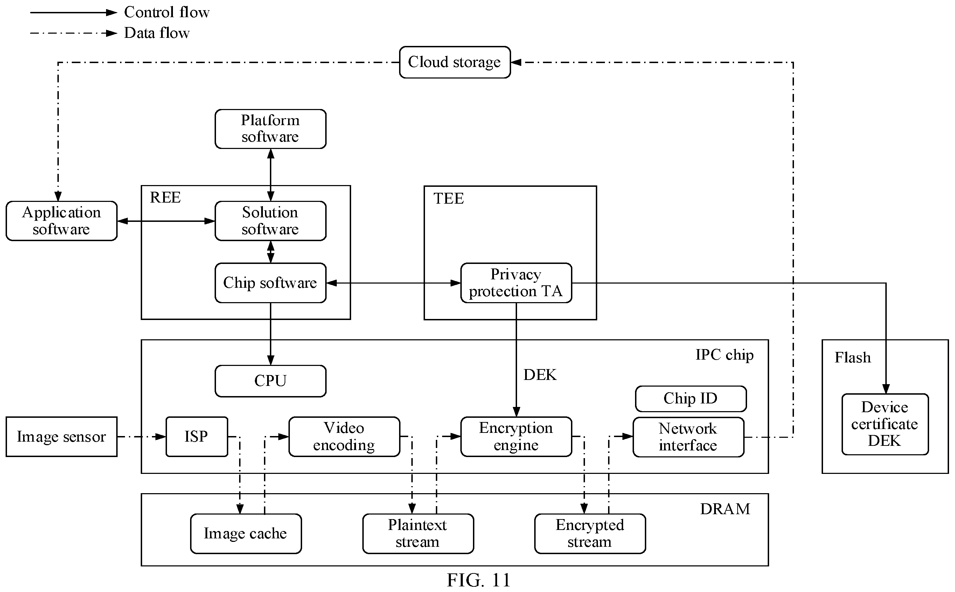

FIG. 11 is a diagram of a secure transmission method for a video stream according to an embodiment of this application. As shown in FIG. 11, an IPC includes two execution environments: a common execution environment with rich applications (Rich Execution Environment, REE) and a trusted execution environment (Trusted Execution Environment, TEE) that may provide an isolation and protection mechanism for an application. Solution software and chip software run in the REE, and a privacy protection trusted application (Trusted Application, TA) runs in the TEE. Application software running on user equipment is responsible for IPC configuration, provides an interface for a user operation, and forms a binding relationship with the privacy protection TA of the IPC. The user equipment generates a user public-private key pair, and may derive, based on a parameter (corresponding to the foregoing random number) provided by the IPC, a key (Wrapping Key, WK) (corresponding to the foregoing wrapping key) for encrypting a data encryption key (Data Encryption Key, DEK) (corresponding to the foregoing stream key), decrypt an encrypted stream key DEK' by using the WK to obtain the DEK, and decrypt an encrypted video stream by using the DEK.

Platform software running on a cloud platform is responsible for IPC and user equipment management.

The solution software running on the IPC REE is responsible for interconnection between the platform software, the application software, and the chip software.

The chip software running on the IPC REE is responsible for IPC chip management.

The privacy protection TA running on the IPC TEE is responsible for generation of a device public-private key pair, verification and storage of a device certificate, binding between the IPC and the user equipment, generation and update of the DEK, setting of the DEK to a hardware encryption engine, and local storage of the DEK. The DEK is protected by the TEE and has high security.

An IPC chip provides hardware such as a CPU, an ISP, video encoding, an encryption engine, a network interface, and a chip ID.

A flash memory (Flash) provides a program and data storage for the privacy protection TA, and the TEE provides a secure storage service.

An image sensor, namely, an original image acquisition unit, outputs digitized image information.

A DRAM provides cache for data processing of the IPC chip.

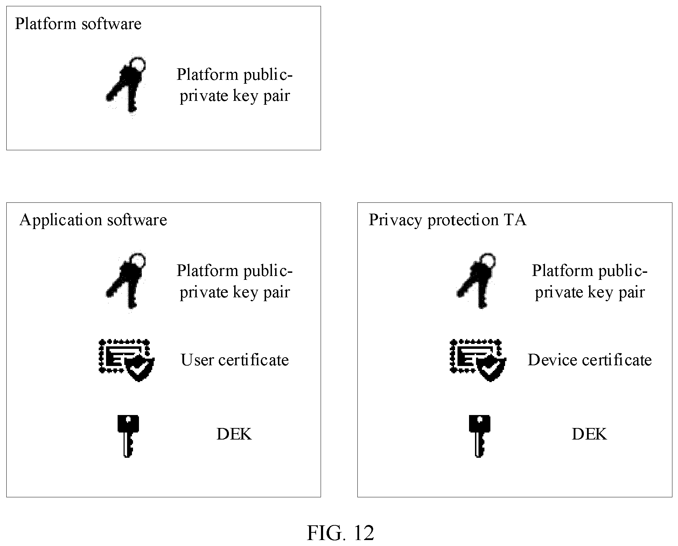

FIG. 12 is a diagram of a key and a certificate system according to an embodiment of this application. As shown in FIG. 12, the system includes the following components:
(1) Platform public-private key pair: The platform public-private key pair is generated by platform software. A platform private key exists only on a cloud platform and confidentiality of the platform private key is protected. A platform public key may be exported and built into user equipment and a privacy protection TA of an IPC to verify authenticity of a message sent by the platform.
(2) User public-private key pair: The user public-private key pair is generated by application software and is in one-to-one correspondence with the user equipment. A user private key is stored in the application software and a user data backup of the cloud platform. Confidentiality of the user private key is protected. A user public key may be sent to a receiver to verify authenticity of a message sent by the application software.
(3) User certificate: The user certificate is generated after a user ID and a user public key are signed based on the platform private key, and is a valid credential of a user.
(4) Device public-private key pair: The device public-private key pair is generated by the privacy protection TA and is in one-to-one correspondence with the IPC. A device private key exists in the privacy protection TA of the IPC and stored in a TEE. Confidentiality of the device private key is protected. A device public key may be sent to the receiver to verify authenticity of a message sent by a device.
(5) Device certificate: The device certificate is generated after a device ID and the device public key are signed based on the platform private key, and is a valid credential of the device.
(6) DEK: The DEK is a symmetric key used for video stream encryption/decryption.

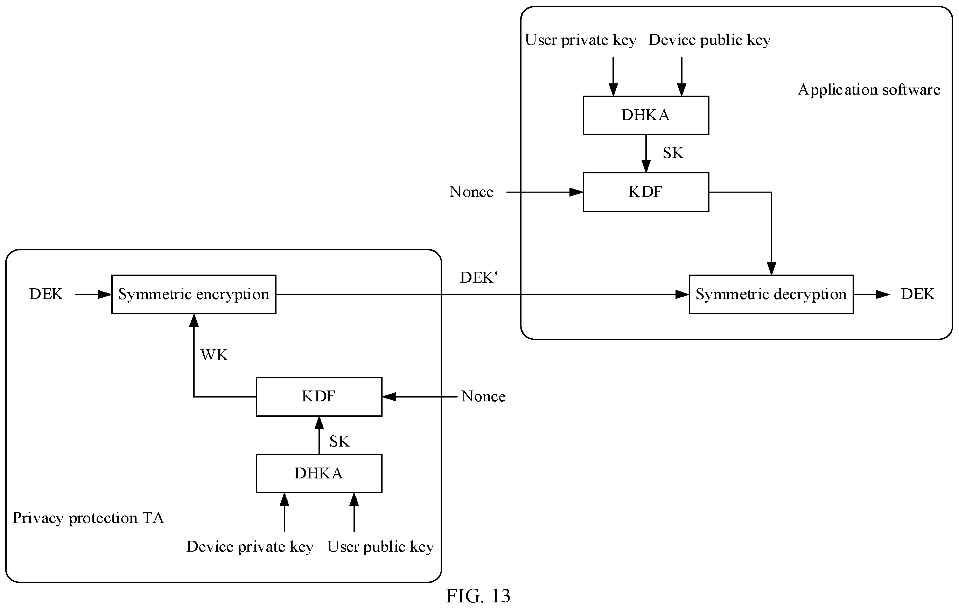

FIG. 13 is a diagram of key derivation and transmission according to an embodiment of this application. As shown in FIG. 13:
(1) A nonce is a random number, is generated by a privacy protection TA, and may be transmitted by using a message in the foregoing binding or key update scenario.
(2) A DEK is a stream key known only to the privacy protection TA and application software, is generated by the privacy protection TA, and is used for video stream encryption.
(3) An SK is a shared key known only to the privacy protection TA and the application software, and is calculated based on a DHKA key exchange protocol.
(4) A WK is a wrapping key, of the DEK, derived based on the nonce, and may be derived from the privacy protection TA and the application software separately.
(5) A DEK' is an encrypted stream key obtained through encryption of the DEK based on the WK, and is transmitted with an encrypted video stream.
(6) A DHKA is a key exchange protocol based on an asymmetric algorithm and, for example, may include RSA, ECC, or SM2.
(7) A KDF may be, for example, a PBKDF2, and may use the shared key as a password (Password) and use a first random number as a salt, to obtain the WK by using a hash (Hash) operation. Alternatively, the KDF may be, for example, an HKDF, and may use the shared key as an HMAC key and use a first random number as an input, to obtain the WK by using an HMAC operation.
(8) Algorithms for symmetric encryption and symmetric decryption are not limited and, for example, may include AES, TDES, or SM4.

Based on the foregoing description, a basic principle of the secure transmission method for a video stream in this application includes:
1. Device registration
   a. A privacy protection TA generates a device public-private key pair based on a chip ID.
   b. The privacy protection TA sends a device public key and a device ID to platform software.
   c. The platform software signs the device public key and the device ID based on a platform private key to generate a device certificate, registers a device, and returns the device certificate.
   d. The privacy protection TA uses a built-in platform public key to verify validity of the device certificate, and locally stores the device certificate if the verification succeeds.
2. Device binding
   a. Application software sends a user certificate to the privacy protection TA.
   b. The privacy protection TA uses the built-in platform public key to verify validity of the user certificate. If the verification succeeds, a nonce is generated and sent to the application software, and a WK is derived based on the manner in FIG. 13.
   c. After receiving the nonce, the application software derives the WK based on the manner in FIG. 13, encrypts the nonce by using the WK to obtain a nonce', and sends the nonce' to the privacy protection TA.
   d. The privacy protection TA uses the WK to decrypt the nonce' to obtain the nonce, and checks whether the nonce is correct. If the nonce is correct, a DEK is generated for video data encryption to complete binding between the device and an account.
3. Video encryption, storage, decryption, and play
   a. A user enables an encryption mode of the device through the application software. The device privacy protection TA sets the DEK to a hardware encryption engine of an IPC chip to encrypt video data.
   b. Encrypted video data is uploaded to cloud storage of a management platform.
   c. After obtaining the encrypted video data from the cloud storage, the application software uses the WK to decrypt a DEK' to obtain the DEK, and then uses the DEK to decrypt a video stream for playing.
4. Key update
   a. The application software initiates a key update.
   b. The privacy protection TA generates a new nonce, derives a new WK based on the manner in FIG. 13, generates a new DEK, encrypts the new DEK by using the WK to obtain a new DEK', and sends the updated nonce and DEK' to the application software.
   c. After receiving the new nonce, the application software derives the new WK based on the manner in FIG. 13, decrypts the new DEK' by using the WK, to obtain the new DEK and complete the key update.

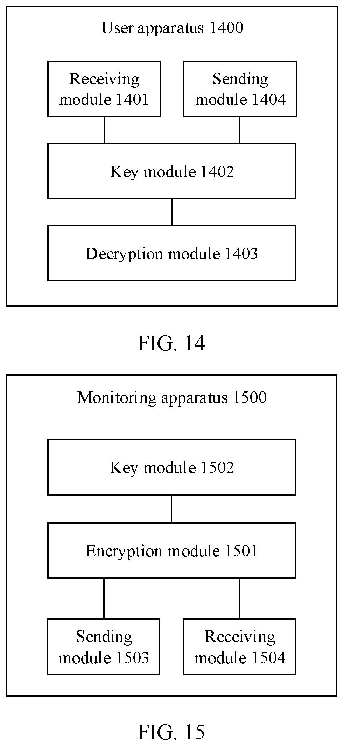

FIG. 14 is an example of a diagram of a structure of a user apparatus 1400 according to this application. As shown in FIG. 14, the user apparatus 1400 in this embodiment may be used in user equipment. The user apparatus 1400 may include a receiving module 1401, a key module 1402, a decryption module 1403, and a sending module 1404. The receiving module 1401 is configured to receive a to-be-processed data stream sent by a cloud platform, where the to-be-processed data stream includes an encrypted video stream and a first encrypted stream key. The key module 1402 is configured to decrypt the first encrypted stream key based on a pre-obtained first wrapping key to obtain a first stream key. The decryption module 1403 is configured to decrypt the encrypted video stream based on the first stream key to obtain a to-be-played video stream.

In a possible implementation, the sending module 1404 is configured to send a pre-obtained user certificate to an Internet Protocol camera IPC. The receiving module 1401 is further configured to receive a first random number sent by the IPC, where the first random number is generated after the IPC successfully verifies the user certificate. The key module 1402 is further configured to generate the first wrapping key based on the first random number.

In a possible implementation, the key module 1402 is specifically configured to generate a shared key shared with the IPC, and obtain the first wrapping key based on the first random number and the shared key by using a key derivation function.

In a possible implementation, the receiving module 1401 is further configured to receive a device certificate sent by the IPC. The key module 1402 is specifically configured to obtain a device public key of the IPC based on the device certificate, and obtain the shared key based on the device public key and a pre-obtained user private key by using a key exchange algorithm.

In a possible implementation, the key module 1402 is further configured to encrypt the first random number based on the first wrapping key to obtain a first encrypted random number. The sending module 1404 is further configured to send the first encrypted random number to the IPC.

In a possible implementation, the sending module 1404 is further configured to send a key update request to the IPC. The receiving module 1401 is further configured to receive a second random number and a second encrypted stream key that are sent by the IPC, where the second random number and the second encrypted stream key are generated by the IPC in response to the key update request. The key module 1402 is further configured to generate a second wrapping key based on the second random number, and decrypt the second encrypted stream key based on the second wrapping key to obtain a second stream key.

The apparatus in this embodiment may be configured to execute the technical solutions executed by the user equipment in the method embodiments shown in FIG. 7 to FIG. 10. Implementation principles and technical effects thereof are similar and are not described herein.

FIG. 15 is an example of a diagram of a structure of a monitoring apparatus 1500 according to this application. As shown in FIG. 15, the monitoring apparatus 1500 in this embodiment may be used in an IPC. The monitoring apparatus 1500 may include an encryption module 1501, a key module 1502, a sending module 1503, and a receiving module 1504. The encryption module 1501 is configured to encrypt a to-be-transmitted video stream based on a pre-obtained first stream key to obtain an encrypted video stream. The key module 1502 is configured to encrypt the first stream key based on a pre-obtained first wrapping key to obtain a first encrypted stream key. The sending module 1503 is configured to send a data stream to a cloud platform, where the data stream includes the encrypted video stream and the first encrypted stream key.

In a possible implementation, the receiving module 1504 is configured to receive a user certificate sent by user equipment. The key module 1502 is further configured to verify the user certificate based on a pre-built-in platform public key, generate a first random number when the verification succeeds, and generate the first wrapping key based on the first random number.

In a possible implementation, the sending module 1503 is further configured to send the first random number to the user equipment. The receiving module 1504 is further configured to receive a first encrypted random number sent by the user equipment, where the first encrypted random number is obtained by the user equipment by encrypting the first random number. The key module 1502 is further configured to decrypt the first encrypted random number based on the first wrapping key to obtain a second random number, and generate the first stream key when the second random number is the same as the first random number.

In a possible implementation, the key module 1502 is specifically configured to obtain a shared key shared with the user equipment, and obtain the first wrapping key based on the first random number and the shared key by using a key derivation function.

In a possible implementation, the key module 1502 is specifically configured to receive a user certificate sent by the user equipment, obtain a user public key of the user equipment based on the user certificate, and obtain the shared key based on the user public key and a pre-obtained device private key by using a key exchange algorithm.

In a possible implementation, the key module 1502 is further configured to generate a device public key and the device private key. The sending module 1503 is further configured to send a device identity and the device public key to the cloud platform. The receiving module 1504 is further configured to receive a device certificate sent by the cloud platform, where the device certificate is generated by the cloud platform by signing the device identity and the device public key based on a platform private key. The key module 1502 is further configured to verify the device certificate based on a pre-built-in platform public key, and store the device certificate when the verification succeeds.

In a possible implementation, the receiving module 1504 is further configured to receive a key update request sent by the user equipment. The key module 1502 is further configured to generate a third random number and a second stream key in response to the key update request, generate a second wrapping key based on the third random number, and encrypt the second stream key based on the second wrapping key to obtain a second encrypted stream key. The sending module 1503 is further configured to send the third random number and the second encrypted stream key to the user equipment.

The apparatus in this embodiment may be configured to execute the technical solutions executed by the IPC in the method embodiments shown in FIG. 7 to FIG. 10. Implementation principles and technical effects thereof are similar and are not described herein.

In an implementation process, the steps in the foregoing method embodiments may be implemented by using a hardware integrated logical circuit in a processor, or by using instructions in a form of software. The processor may be a general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, or a discrete hardware component. The general-purpose processor may be a microprocessor, or the processor may be any conventional processor or the like. The steps of the methods disclosed in embodiments of this application may be directly presented as being performed and completed by a hardware encoding processor, or performed and completed by a combination of hardware and a software module in an encoding processor. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

The memory in the foregoing embodiments may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of software functional unit and sold or used as an independent product, the functions may be stored in a computer-readable storage medium. Based on such an understanding, the technical solutions in this application essentially, or the part contributing to the conventional technology, or a part of the technical solutions may be implemented in a form of software product. The computer software product is stored in a storage medium and includes several instructions for instructing a computer device (a personal computer, a server, a network device, or the like) to perform all or a part of the steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A secure transmission method for a video stream, comprising:
receiving a to-be-processed data stream sent by a cloud platform, wherein the to-be-processed data stream comprises an encrypted video stream and a first encrypted stream key;
decrypting the first encrypted stream key based on a pre-obtained first wrapping key to obtain a first stream key; and
decrypting the encrypted video stream based on the first stream key to obtain a to-be-played video stream.

2. The method according to claim 1, further comprising:
sending a pre-obtained user certificate to an Internet Protocol camera IPC;
receiving a first random number sent by the IPC, wherein the first random number is generated after the IPC successfully verifies the user certificate; and
generating the first wrapping key based on the first random number.

3. The method according to claim 2, wherein the generating the first wrapping key based on the first random number comprises:
generating a shared key shared with the IPC; and
obtaining the first wrapping key based on the first random number and the shared key by using a key derivation function.

4. The method according to claim 3, wherein the generating a shared key shared with the IPC comprises:
receiving a device certificate sent by the IPC;
obtaining a device public key of the IPC based on the device certificate; and
obtaining the shared key based on the device public key and a pre-obtained user private key by using a key exchange algorithm.

5. The method according to any one of claims 2 to 4, further comprising:
encrypting the first random number based on the first wrapping key to obtain a first encrypted random number; and
sending the first encrypted random number to the IPC.

6. The method according to any one of claims 1 to 5, further comprising:
sending a key update request to the IPC;
receiving a second random number and a second encrypted stream key that are sent by the IPC, wherein the second random number and the second encrypted stream key are generated by the IPC in response to the key update request;
generating a second wrapping key based on the second random number; and
decrypting the second encrypted stream key based on the second wrapping key to obtain a second stream key.

7. A secure transmission method for a video stream, comprising:
encrypting a to-be-transmitted video stream based on a pre-obtained first stream key to obtain an encrypted video stream;
encrypting the first stream key based on a pre-obtained first wrapping key to obtain a first encrypted stream key; and
sending a data stream to a cloud platform, wherein the data stream comprises the encrypted video stream and the first encrypted stream key.

8. The method according to claim 7, further comprising:
receiving a user certificate sent by user equipment;
verifying the user certificate based on a pre-built-in platform public key;
generating a first random number when the verification succeeds; and
generating the first wrapping key based on the first random number.

9. The method according to claim 8, further comprising:
sending the first random number to the user equipment;
receiving a first encrypted random number sent by the user equipment, wherein the first encrypted random number is obtained by the user equipment by encrypting the first random number;
decrypting the first encrypted random number based on the first wrapping key to obtain a second random number; and
generating the first stream key when the second random number is the same as the first random number.

10. The method according to claim 8 or 9, wherein the generating the first wrapping key based on the first random number comprises:
obtaining a shared key shared with the user equipment; and
obtaining the first wrapping key based on the first random number and the shared key by using a key derivation function.

11. The method according to claim 10, wherein the obtaining a shared key shared with the user equipment comprises:
receiving a user certificate sent by the user equipment;
obtaining a user public key of the user equipment based on the user certificate; and
obtaining the shared key based on the user public key and a pre-obtained device private key by using a key exchange algorithm.

12. The method according to any one of claims 7 to 11, further comprising:
generating a device public key and the device private key;
sending a device identity and the device public key to the cloud platform;
receiving a device certificate sent by the cloud platform, wherein the device certificate is generated by the cloud platform by signing the device identity and the device public key based on a platform private key;
verifying the device certificate based on a pre-built-in platform public key; and
storing the device certificate when the verification succeeds.

13. The method according to any one of claims 7 to 12, further comprising:
receiving a key update request sent by the user equipment;
generating a third random number and a second stream key in response to the key update request;
generating a second wrapping key based on the third random number;
encrypting the second stream key based on the second wrapping key to obtain a second encrypted stream key; and
sending the third random number and the second encrypted stream key to the user equipment.

14. A user apparatus, comprising:
a receiving module, configured to receive a to-be-processed data stream sent by a cloud platform, wherein the to-be-processed data stream comprises an encrypted video stream and a first encrypted stream key;
a key module, configured to decrypt the first encrypted stream key based on a pre-obtained first wrapping key to obtain a first stream key; and
a decryption module, configured to decrypt the encrypted video stream based on the first stream key to obtain a to-be-played video stream.

15. The apparatus according to claim 14, further comprising a sending module, wherein
the sending module is configured to send a pre-obtained user certificate to an Internet Protocol camera IPC;
the receiving module is further configured to receive a first random number sent by the IPC, wherein the first random number is generated after the IPC successfully verifies the user certificate; and
the key module is further configured to generate the first wrapping key based on the first random number.

16. The apparatus according to claim 15, wherein the key module is specifically configured to: generate a shared key shared with the IPC, and obtain the first wrapping key based on the first random number and the shared key by using a key derivation function.

17. The apparatus according to claim 16, wherein the receiving module is further configured to receive a device certificate sent by the IPC; and
the key module is specifically configured to obtain a device public key of the IPC based on the device certificate, and obtain the shared key based on the device public key and a pre-obtained user private key by using a key exchange algorithm.

18. The apparatus according to any one of claims 14 to 17, wherein the key module is further configured to encrypt the first random number based on the first wrapping key to obtain a first encrypted random number; and
the sending module is further configured to send the first encrypted random number to the IPC.

19. The apparatus according to any one of claims 14 to 18, further comprising the sending module, wherein
the sending module is further configured to send a key update request to the IPC;
the receiving module is further configured to receive a second random number and a second encrypted stream key that are sent by the IPC, wherein the second random number and the second encrypted stream key are generated by the IPC in response to the key update request; and
the key module is further configured to generate a second wrapping key based on the second random number, and decrypt the second encrypted stream key based on the second wrapping key to obtain a second stream key.

20. A monitoring apparatus, comprising:
an encryption module, configured to encrypt a to-be-transmitted video stream based on a pre-obtained first stream key to obtain an encrypted video stream;
a key module, configured to encrypt the first stream key based on a pre-obtained first wrapping key to obtain a first encrypted stream key; and
a sending module, configured to send a data stream to a cloud platform, wherein the data stream comprises the encrypted video stream and the first encrypted stream key.

21. The apparatus according to claim 20, further comprising a receiving module, wherein
the receiving module is configured to receive a user certificate sent by user equipment; and
the key module is further configured to verify the user certificate based on a pre-built-in platform public key, generate a first random number when the verification succeeds, and generate the first wrapping key based on the first random number.

22. The apparatus according to claim 21, wherein the sending module is further configured to send the first random number to the user equipment;
the receiving module is further configured to receive a first encrypted random number sent by the user equipment, wherein the first encrypted random number is obtained by the user equipment by encrypting the first random number; and
the key module is further configured to decrypt the first encrypted random number based on the first wrapping key to obtain a second random number, and generate the first stream key when the second random number is the same as the first random number.

23. The apparatus according to claim 21 or 22, wherein the key module is specifically configured to obtain a shared key shared with the user equipment, and obtain the first wrapping key based on the first random number and the shared key by using a key derivation function.

24. The apparatus according to claim 23, wherein the key module is specifically configured to receive a user certificate sent by the user equipment, obtain a user public key of the user equipment based on the user certificate, and obtain the shared key based on the user public key and a pre-obtained device private key by using a key exchange algorithm.

25. The apparatus according to any one of claims 20 to 24, wherein the key module is further configured to generate a device public key and the device private key;
the sending module is further configured to send a device identity and the device public key to the cloud platform;
the receiving module is further configured to receive a device certificate sent by the cloud platform, wherein the device certificate is generated by the cloud platform by signing the device identity and the device public key based on a platform private key; and
the key module is further configured to verify the device certificate based on a pre-built-in platform public key, and store the device certificate when the verification succeeds.

26. The apparatus according to any one of claims 20 to 25, further comprising the receiving module, wherein
the receiving module is further configured to receive a key update request sent by the user equipment;
the key module is further configured to generate a third random number and a second stream key in response to the key update request, generate a second wrapping key based on the third random number, and encrypt the second stream key based on the second wrapping key to obtain a second encrypted stream key; and
the sending module is further configured to send the third random number and the second encrypted stream key to the user equipment.

27. User equipment, comprising:
one or more processors; and
a memory, configured to store one or more programs, wherein
when the one or more programs are executed by the one or more processors, the one or more processors are enabled to implement the method according to any one of claims 1 to 6.

28. A monitoring device, comprising:
one or more processors;
one or more cameras, configured to capture a monitoring video; and
a memory, configured to store one or more programs, wherein
when the one or more programs are executed by the one or more processors, the one or more processors are enabled to implement the method according to any one of claims 7 to 13.

29. A computer-readable storage medium, comprising a computer program, wherein when the computer program is executed on a computer, the computer is enabled to perform the method according to any one of claims 1 to 13.

30. A computer program product, wherein the computer program product comprises computer program code, and when the computer program code is run on a computer, the computer is enabled to perform the method according to any one of claims 1 to 13.
